Europäisches Patentamt

European Patent Office

Office européen des brevets

(19)

(11) Publication number:

**0 336 915**

**A2**

# (12) EUROPEAN PATENT APPLICATION

(21) Application number: **89850106.9**

(22) Date of filing: **04.04.89**

(51) Int. Cl.⁴: **F 16 B 7/04**

(30) Priority: **05.04.88 SE 8801224**

(43) Date of publication of application:
**11.10.89 Bulletin 89/41**

(84) Designated Contracting States: **DE FR GB IT SE**

(71) Applicant: **Danielsson, Curth**
**Lönnholmsgatan 5 A**
**S-552 43 Jönköping (SE)**

**Andersson, Karl Olof**
**Bäverstigen 38**
**S-150 23 Enhörna (SE)**

(72) Inventor: **Danielsson, Curth**
**Lönnholmsgatan 5 A**
**S-552 43 Jönköping (SE)**

(74) Representative: **Nilsson, Karl et al**
**Stenhagen Patentbyra AB Bellmansgatan 24**
**S-116 47 Stockholm (SE)**

(54) **A system for connecting together profiled sections and a method for the manufacture of a coupling element included therein.**

(57) A system for coupling a first profiled section (1) having a longitudinally extending channel (1) of at least substantially rectangular cross-section to a second profiled section (2) having a longitudinally extending slot (17) whose slot opening is defined by mutually facing edge flanges (18), includes a substantially U-shaped coupling element (3). The coupling element has two legs (4, 5) which can be deflected or bent towards one another against the action of a spring force and a web (6) which connects the two legs at one end thereof. One leg (4) of the coupling element (3) has a fixed projection (15) which extends away from the other leg (5) and which is intended to snap into an opening (16) in the first profiled section (1) when the coupling element (3) is inserted thereinto. The free end parts (11, 12) of the legs (4, 5) present on the mutually remote sides of the legs ridges which extend over the width of the legs and the height of which decreases progressively in a direction towards the free leg end and also in the opposite direction. The end parts (11, 12) also have a total thickness which is smaller than the distance between the mutually facing edge flanges (18) of the slot (17).

Fig. 2

## Description

**A system for connecting together profiled sections and a method for the manufacture of a coupling element included therein.**

The present invention relates to a system for coupling a first profiled section which has a longitudinally extending channel of at least substantially rectangular cross-section, to a second profiled section which has a longitudinally extending slot whose slot opening is defined by mutually facing edge flanges, said system including a substantially U-shaped coupling element having two legs, which can be urged or deflected towards one another against a spring force, and a web joining the legs at one end thereof, and which coupling element, with the web first, is insertable into and displaceable axially along the channel of the first profiled section and capable of being fixed or held in a predetermined position along said channel, in which position there projects from the channel an end part adapted for connection to the second profiled section and configured for engagement in the slot.

In one known system of this kind (see for instance DE-A-2701488) the legs of the coupling element are held apart and the coupling element is held against axial movement in the end part of one of the profiled sections to be coupled together by means of a screw which passes through a screw-threaded bore extending through one leg of the coupling element and acts at its one end against the inner surface of the opposing leg, such as to urge said legs apart, whereas the other end of the screw is located in an opening in the opposing side of the profiled section in which the coupling element is fitted and is effective in holding the coupling element against movement in the axial direction of the section. In the case of this known system, it is necessary to remove the screw prior to inserting the coupling element into said one end of the profiled section. The coupling element is moved along the profiled section, until the screw-threaded bore in said one leg lies in exact register with the opening in the side of the profiled section, whereupon the screw is inserted through the opening and screwed into the bore. This procedure is highly time consuming and is so complicated that the work of coupling together profiled sections with the aid of such coupling elements can only be carried out by one person with difficulty.

An object of the present invention is to provide a novel and useful profiled section coupling system of the aforedescribed kind which is so improved as to avoid the aforementioned drawbacks.

To this end, it is proposed in accordance with the invention that for the purpose of holding the coupling element against axial movement in the first profiled section, one leg of said element has provided thereon a fixed projection which extends away from the other leg and which makes it necessary to deflect or urge the legs towards one another when inserting the coupling element into the profiled section and is intended to snap into an opening provided in opposing side of the profiled section by the action of said spring force when the coupling element reaches said position; that the end parts have provided on the mutually remote sides of said legs ridges which extend over the width of the legs and which decrease in height both in a direction towards the free leg end and in the opposite direction; and that the end parts will have a combined thickness which is smaller than the distance between the mutually facing end flanges of the slot. This arrangement will enable the coupling element to be brought readily into position in the associated profiled section, by holding the free ends of the legs urged together as the coupling element is displaced along the profiled section, until the projection is located axially inwards of the section end, whereafter upon further movement of the coupling element the projection will finally snap into the opening formed in the section wall for the purpose of accommodating said projection, and therewith secure the coupling element against movement in the axial direction of the profiled section. The end part of the coupling element which projects from the end of the profiled section can then be inserted into the slot of the second profiled section without risk of further displacement of the coupling element inwardly along the first profiled section, by first bringing the two leg ends together, by pressing solely the end part of that leg which does not carry the projection towards the associated edge flange and thereafter pressing the two end parts brought together into the slot of the second profiled section. As a result of the spring forces prevailing in the coupling element and as a result of the particular configuration of the ridges provided on said end parts, the advantage is afforded that the first profiled section will be automatically centered in relation to and drawn towards the second profiled section.

Other advantageous of the inventive system are set forth in Claims 2-5.

As before mentioned, the present invention also relates to a method for the manufacture of a coupling element which is intended for coupling or joining together two profiled sections and which is made of a springy elastic, preferably metallic material, although the use of a plastics material is possible. The invented method comprises extruding a profile of substantially U-shaped cross-section and cutting the profile to form substantially U-shaped coupling elements, each comprising two legs which can be urged or deflected towards one another against a spring force, and a web joining the two legs together, and each of which coupling elements can be received in a hollow end part of one of the two profiled sections to be joined together. In conjunction with the manufacture of the U-section profile, said profile is provided on one external side thereof between its side edges with a longitudinally extending strip of substantially rectangular cross-section which strip, subsequent to dividing the profile into coupling elements, forms on the one leg of respective coupling elements a fixed projection which faces away from the other leg, whereafter the projection of each coupling element is given a cylindrical form, suitably in conjunction with forming a screw-threaded bore through the projection. This can be effected, for instance, with the aid of a combination tool which will mill or cut away any unwanted parts of the original projection in conjunction with forming and/or screw-threading a bore passing through the projection and associated leg.

Exemplifying embodiments of the invention will now be described in more detail with reference to the accompanying drawing, in which

Figure 1 is a side view of two profiled sections coupled or joined together by means of the inventive arrangement;

Figure 2 is a sectional view taken on the line II-II in Figure 1;

Figure 3 is a side view of the coupling element used in the system illustrated in Figures 1 and 2; and

Figure 4 is a side view of two profiled sections coupled together by means of devices according to the present invention.

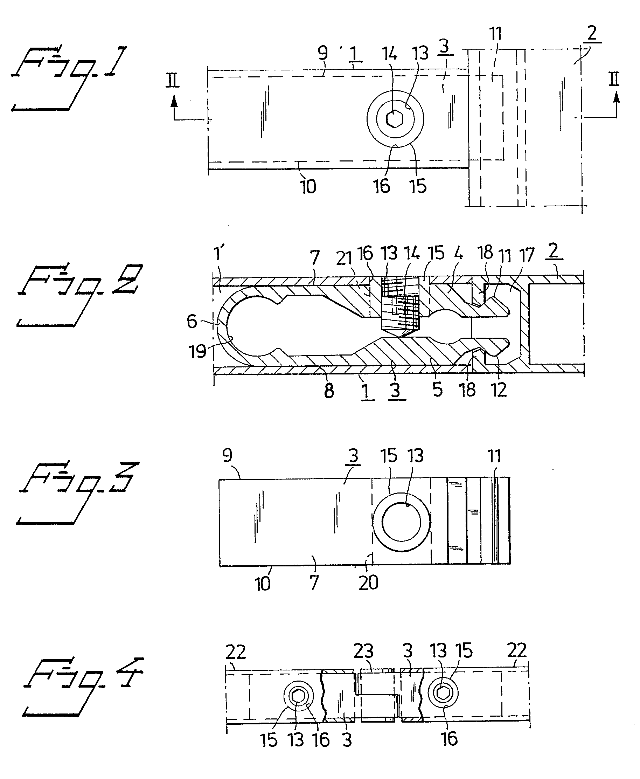

In Figures 1 and 2, the references 1 and 2 identify two profiled sections, for instance two extruded aluminium sections. The sections 1, 2 are joined together with the aid of an arrangement which includes a U-shaped coupling element 3 (also shown in Figure 3) having two legs 4, 5 and a web 6, which joins together the legs at one end thereof. The coupling element 3 may be made from any appropriate material possessing a given inherent elasticity or springiness, e.g. from an appropriate plastics material possessing such properties, although it is preferred to extrude the coupling element from a suitable aluminium quality that has good spring characteristics.

The legs 4, 5 have substantially flat external surfaces 7, 8 and edge surfaces 9, 10, wherewith in the normal state of the coupling element 3, the outer surfaces 7, 8 of the legs 4, 5 will be substantially parallel with one another and the smallest distance between the inner surfaces of the legs 4, 5 will exceed considerably the wall thickness of the profiled section 1, said section having extending axially there along a channel 1' of rectangular cross-section. Provided at the free ends of the legs 4, 5 are nose parts 11, 12 in the form of two ridges which extend across the whole of the vertical extension of the coupling element 3 in Figures 1 and 3 and which decrease in height both towards the free leg end and in the opposite direction. The one leg 4 is provided with a screw-threaded bore 13 in which a so-called Allen screw 14 is fitted, said screw acting on the inside of the other leg 5, in the illustrated position, and preventing further movement of the legs towards one another. Subsequent to backing off the screw 14 to an extent such that the screw is essentially fully accommodated in the bore 13, the legs 4, 5 can be deflected or urged towards one another against the action of their inherent springiness or elastic restoring characteristics.

The one leg 4 has provided thereon a substantially circular projection 15 which projects out from the outer surface 7 of said leg and which when the coupling element 3 is inserted into the profiled section 1 will snap into an opening 16 formed in the wall of said section, under the influence of the spring force prevailing in the legs. The height of the projection 15 is at most equal to the wall thickness of the section, so that the projection will not extend from the opening 16 beyond the section surface embracing said opening. The inner surface of the web 6 and adjoining parts of the legs 4, 5 form a substantially part-cylindrical surface 19 which embraces an angle greater than 180°, as is clearly shown in Figure 2.

As will best be seen from Figure 2, the profiled section 2 is intended to receive the nose parts 11, 12 of the coupling element 3 in a longitudinally extending slot 17 which has mutually facing edge flanges or lips 18 having bevelled outer edges. The distance between the flanges 18 is so adapted in relation to the coupling element 3 as to enable the nose parts 11, 12 of said element to be inserted into the slot 17 between the flanges 18, wherewith the legs 4, 5 are urged resiliently together by the camming action of the nose parts 11, 12 and the bevelled flange edges during passage of the nose parts between said flanges 18, and then spring apart such as to urge the profiled section 1 against the profiled section 2 and hold said section 1 and said coupling element 3 in relation to said section 2 by camming engagement between the flanges 18 and the sloping leg regions located immediately behind the nose parts 11, 12. Thus, when the coupling element 3 is used, there will be formed in the profiled section 1, at a predetermined suitable distance from one end thereof, an opening 16 which will fit the projection 15. With the screw 14 of the coupling element 3 backed off in relation to the position shown in Figure 2 to an extent such that the screw is accommodated within the bore 3 and with the legs 4, 5 initially brought together, the coupling element 3 is inserted into said section until the projection 15 snaps into the opening 13, in the manner illustrated in Figure 2. The nose parts 11, 12 are finally snapped into the slot 17 in the profiled section 2 and the screw 14 is screwed down to the position illustrated in Figure 2, therewith preventing withdrawal of the coupling element 3 from the slot 17 in the profiled section 2.

The coupling element 3 is preferably made of aluminium which is extruded to a profile of substantially U-shaped cross-section, whereafter said profile is divided into lengths corresponding to the height of, for instance, the coupling element 3 shown in Figure 3. When the profiled sections 1, 2 are to be joined together perpendicularly to one another, the profile is cut at right angles to its longitudinal axis, whereas if the profiled section 1, 2 are to be joined together at some other angle, the profile is cut at a corresponding angle relative to its longitudinal axis. In conjunction with the manufacture of the U-sectioned profile, the profile is preferably provided on one outer surface thereof, corresponding to the side 7 of the coupling element 3, with a longitudinally extending strip of substantially rectangular cross-section, this strip, subsequent to dividing the profile to form the coupling element 3, forming a fixed projection on one leg 4 of said element, said projection extending away from the other leg of said element. One such projection, which is rectangular in end view, is indicated by broken lines in at 20 in Figure 3 and would require a corresponding, rectangular opening in the profiled section 1. However, round openings 15 in the profiled section 1 are to be preferred, and consequently the rectangular projection 20 is preferably machined or worked in a manner to form the cylindrical projection 15, suitably in conjunction with providing the screw-threaded bore 13 passing centrally through the projection 15.

Alternatively, one leg 4 of the coupling elements 3 may be provided with a bore having a diameter which corresponds to the diameter of the projection 15, as indicated in broken lines at 21 in Figure 3, and a peg-like or tubular insert can be applied therein, e.g. by screwing, soldering, glueing, etc., such as to form a cylindrical projection 15 and optionally a bore 13 for a screw 14.

Figure 4 illustrates the use of coupling elements 3 for pivotally connecting together two profiled sections 22. The profiled sections 22 coincide in all essentials with the profiled section 1 of Figures 1 and 2, and are each provided with an opening 16 for receiving the projection 15 of a respective coupling element 3. The coupling elements 3 are inserted in associated profiled sections 22 with the nose parts first and are locked in said sections by means of screws 13. Projecting outwardly from each profiled section 22 is the web part 6 of the coupling element 3 and adjoining parts of the legs of said element, the extent of this projection being such that the rear element part exhibiting the part-cylindrical surface 19 shown in Figure 2 is located completely outside profiled section 22. These outwardly projecting parts are milled down to half their heights, as will best be seen from Figure 4, and extending through the space embraced by the surfaces 19 is a cylindrical peg 23 which connects together the coupling elements 3, and therewith the profiled sections 22, in a manner such as to enable said sections to pivot relative to one another about the peg 23.

The invention is not restricted to the exemplifying embodiments described with reference to the drawing, but can be realised in any suitable manner within the scope of the inventive concept as defined in the following claims.

**Claims**

1. A system for coupling a first profiled section (1) which has a longitudinally extending channel (1') of at least substantially rectangular cross-section to a second profiled section (2) which has a longitudinally extending slot (17) whose slot opening is defined by mutually facing edge flanges (18), said system including a substantially U-shaped coupling element (3) having two legs (4, 5), which can be urged or deflected towards one another against a spring force, and a web (6) joining the legs at one end thereof, and which coupling element, with the web first, is insertable into and displaceably axially along the channel (1') of the first profiled section (1) and capable of being fixed in a predetermined position along said channel, in which position an end part (11, 12) adapted for connection to the second profiled section (2) and configured for engagement in the slot (17) projects from the channel (1'), characterised in that for the purpose of holding the coupling element (3) against axial movement in said first profiled section (1) one leg (4) of said element has provided thereon a fixed projection (15) which extends away from the other leg (5) and which makes it necessary to bend or deflect the legs towards one another when inserting the coupling element into the profiled section (1) and is intended to snap into an opening (16) provided in the opposing side of the profiled section by the action of said spring force when the coupling element (3) reaches said position, ; in that the end parts (11, 12) have provided on the mutually remote sides of the legs ridges which extend over the width of the legs and which decrease successively in height both in a direction towards the free leg end and in the opposite direction; and in that the end parts (11, 12) have a combined thickness which is smaller than the distance between the mutually facing edge flanges (18) of the slot (17).

2. A system according to Claim 1, characterised in that the projection (15) projects outwardly from its associated leg (4) through a distance which coincides substantially with the thickness of said profiled section side.

3. A system according to Claim 1 or 2, characterised by a substantially cylindrical projection (15).

4. A system according to any one of Claims 1-3, characterised in that the projection (15) is an integral part of the leg (4).

5. A system according to any one of Claims 1-4, comprising a screw (14) which is located in a screw-threaded bore (13) extending through the one leg (4) and which acts on the inner surface of the other leg (5) such as to hold the legs apart, characterised in that the screw-threaded bore (13) extends through the projection (15).

6. A method for manufacturing a coupling element (3) for coupling together two profiled sections (1, 2), said coupling element being made of an elastic, preferably metallic material, said method comprising extruding a profile of substantially U-shaped cross-section and cutting the profile to form substantially U-shaped coupling elements (3) each comprising two legs (4, 5), which can be deflected or bent towards one another against a spring force, and a web (6) which joins said legs (4, 5), wherein said coupling element is intended to be received in a hollow end part of one (1) of the two profiled sections (1, 2) to be coupled together, characterised in that, in conjunction with extruding the U-section profile, said profile is provided on one external side thereof between its side edges with a longitudinally extending strip of substantially rectangular cross-section, which strip, subsequent to dividing the profile into coupling elements (3), forms on the one leg (4) of respective coupling elements a fixed projection (20) which faces away from the other leg (5); and in that the projection (20) on each coupling element (3) is given a cylindrical form, suitably in conjunction with forming a screw-threaded bore (13) through the projection.

Fig.1

Fig.2

Fig.3

Fig.4